# EUROPÄISCHE PATENTSCHRIFT

(11) **EP 0 458 139 B1**
(45) Veröffentlichungstag und Bekanntmachung des Hinweises auf die Patenterteilung: **26.07.1995**
(21) Anmeldenummer: 91107565.3
(22) Anmeldetag: 09.05.1991
(51) Int. Cl.: B29C 47/24, B29C 47/26

(54) **Werkzeugblock für das Strangpressen einer Kabelführungsvorrichtung**
Die for the extrusion of a cable guidance device
Filière pour l'extrusion d'un dispositif de guidage de câble

(30) Priorität: 24.05.1990 DE 4016726; 28.09.1990 DE 4030674
(43) Veröffentlichungstag der Anmeldung: 27.11.1991
(73) Patentinhaber: Dipl.-Ing. Dr. Ernst Vogelsang GmbH & Co. KG, D-45699 Herten (DE)
(72) Erfinder: Vogelsang, Horst, W-4352 Herten (DE)
(74) Vertreter: Masch, Karl Gerhard, Dr.

(56) Entgegenhaltungen:
- DE-A- 1 808 271
- FR-A- 2 580 437
- GB-A- 2 096 533
- GB-A- 2 135 136
- US-A- 3 496 605
- US-A- 3 666 389
- PATENT ABSTRACTS OF JAPAN vol. 14, no. 266 (M-982)(4209) 8. Juni 1990 & JP-A-2 078 517 (SUMITOMO) 19. März 1990

## Beschreibung

Die Erfindung betrifft einen Werkzeugblock für das Strangpressen einer Kabelführungsvorrichtung aus thermoplastischem Kunststoff mit mehreren Kabelführungsrohren die über Stege verbunden und zu einem Kabelführungsrohrbündel zusammenlegbar sind, mit Hilfe eines Extruders, - mit einem mehrteiligen Außenwerkzeug und einem Innenwerkzeug wobei der Werkzeugblock die Außenkontur eines Kabelführungsrohres bestimmende Extrusionskanäle und darin einen die runde Innenkontur des Kabelführungsrohres bestimmenden Dorn aufweist, der über Stege im Außenwerkzeug gehalten ist. Solche Werkzeugblöcke sind bekannt. Es versteht sich, daß ein solcher Werkzeugblock einen Extruderanschluß aufweist, der im Werkzeugblock im allgemeinen in eine Verteilerkammer einmündet. Kabelführungsvorrichtungen mit mehreren Kabelführungsrohren, deren einzelne Kabelführungsrohre parallel verlaufen und durch Stege verbunden sind, sind bekannt (vgl. DE 38 06 663 A1). Die Stege sind ausreichend flexibel, um eine Bündelung der Kabelführungsrohre zuzulassen.

Bei den aus der Praxis bekannten Werkzeugblöcken, von denen die Erfindung ausgeht, sind die Dorne hohle oder massive Bauteile mit glattem Dornmantel. Sie sind der Innenkontur der einzelnen Kabelführungsrohre angepaßt und erzeugen eine glatte Innenwand in den einzelnen Kabelführungsrohren. Der Querschnitt der Extrusionskanäle bestimmt den Außenquerschnitt der Kabelführungsrohre. Es ist bisher nicht möglich, den Innenmantel der einzelnen Kabelführungsrohre von Kabelführungsvorrichtungen mit mehreren Kabelführungsrohren mit Gleitrippen alternierender Richtung oder Steigung zu versehen. Andererseits ist es bekannt, daß solche Gleitrippen das Einziehen der Kabel erleichtern.

Der Erfindung liegt die Aufgabe zugrunde, einen Werkzeugblock des eingangs beschriebenen Aufbaus so weiter auszubilden, daß die Kabelführungsrohre der Kabelführungsvorrichtung ohne Schwierigkeiten mit Gleitrippen alternierenden Drehsinns oder mit wellenförmig verlaufenden Gleitrippen versehen werden können.

Zur Lösung dieser Aufgabe lehrt die Erfindung, daß mehrere über stegbildende Schlitze verbundene Extrusionskanäle und darin angeordnete Dorne mit einem Gleitrippenwerkzeug, welches umfangsseitig eine gleitrippenbildende Profilierung aufweist, und mit einer Gleitrippenwerkzeugwelle nebeneinander angeordnet sind, wobei die Gleitrippenwerkzeugwellen unmittelbar oder über zumindest eine Zwischenwelle aus dem Werkzeugblock herausgeführt sowie an einen Antrieb angeschlossen sind, der mit alternierendem Drehsinn arbeitet.

Werkzeugblöcke für das Strangpressen von einzelnen Kabelführungsfohren aus thermoplastischem Kunststoff, die innenseitig schraubenwendelförmig umlaufende Gleitrippen besitzen, sind bekannt (US 36 66 389, JA-A-2 078 517, DE-A-18 08 271). Sie besitzen einen Extrusionskanal, einen darin angeordneten Dorn mit einem Gleitrippenwerkzeug und ein Getriebe zum Antrieb des Dornes. Zur Entwicklung von Werkzeugblöcken für das Strangpressen einer Kabelführungsvorrichtung aus thermoplatischem Kunststoff mit mehreren Kabelführungsrohren, deren Gleitrippen alternierenden Drehsinn aufweisen oder wellenförmig verlaufen, haben diese bekannten Maßnahmen nicht beigetragen. - Bei dem erfindungsgemäßen Werkzeugblock entstehen im Bereich der stegbildenden Schlitze keine Ausformungsprobleme. Die Stege zwischen den einzelnen Kunststoffrohren, die Kunststoffrohre und die Gleitrippen werden störungsfrei ausgeformt.

Im folgenden werden die beschriebenen und weitere Merkmale der Erfindung anhand einer lediglich ein Ausführungsbeispiel darstellenden Zeichnung ausführlicher erläutert. Es zeigen in schematischer Darstellung
- Fig. 1: einen Axialschnitt durch einen erfindungsgemäßen Werkzeugblock,
- Fig. 2: in gegenüber der Fig. 1 wesentlich verkleinertem Maßstab eine Draufsicht auf einen Werkzeugblock für die Herstellung einer Kabelführungsvorrichtung mit mehreren Kabelführungsrohren,
- Fig. 3: eine Seitenansicht des Gegenstandes der Fig. 2,
- Fig. 4: eine Stirnansicht des Gegenstandes der Fig. 2,
- Fig. 5: entsprechend der Fig. 2 eine andere Ausführungsform eines Werkzeugblockes für die Herstellung einer Kabelführungsvorrichtung mit mehreren Kabelführungsrohren,
- Fig. 6: eine Seitenansicht des Gegenstandes der Fig. 5,
- Fig. 7: eine Stirnansicht des Gegenstandes der Fig. 5,
- Fig. 8: ein Kabelführungsrohr einer Kabelführungsvorrichtung, welches mit Hilfe eines erfindungsgemäßen Werkzeugblocks hergestellt wurde, in der Seitenansicht, teilweise aufgebrochen,
- Fig. 9: einen Querschnitt durch den Gegenstand der Fig. 8, und
- Fig. 10: in der Abwicklung Gleitrippen einer hergestellten Kabelführungsvorrichtung.

Der in den Figuren dargestellten Werkzeugblock 1 ist für das Strangpressen einer Kabelführungsvorrichtung aus thermoplastischem Kunststoff mit Hilfe eines Extruders bestimmt. Folglich besitzt der Werkzeugblock 1 einen entsprechenden Extruderanschluß 2. Die Kabelführungsvorrichtung 14 besteht aus mehreren Kabelführungsrohren 15. Zum grundsätzlichen Aufbau gehören ein mehrteiliges Außenwerkzeug 3 und ein Innenwerkzeug 4. Der Werkzeugblock 1 besitzt mehrere die Außenkontur von Kabelführungsrohren 14 bestimmenden Extrusionskanälen 5 und darin einen die runde Innenkontur des Kabelführungsrohres bestimmenden Dorn 6, der über Stege, die Bauteile des Innenwerkzeuges sind, im Außenwerkzeug 3 gehalten ist. Die Außenkontur des Kabelführungsrohres kann einen beliebigen Querschnitt aufweisen. Sie ist im Ausführungsbeispiel, jedoch nicht beschränkend, rund angedeutet worden.

Zum Zwecke der Erzeugung von Gleitrippen in der Innenkontur des Kabelführungsrohres (vgl. die Fig. 8 bis 10), ist mit dem Dorn 6 jeweils ein Gleitrippenwerkzeug 7 verbunden, welches umfangsseitig eine gleitrippenbildende Profilierung 8 aufweist. Die Anordnung ist so getroffen, daß das Gleitrippenwerkzeug 7 an eine Gleitrippenwerkzeugwelle 9 angeschlossen ist, die in dem Dorn 6 gelagert ist. Das Gleitrippenwerkzeug 7 ist über die Gleitrippenwerkzeugwelle 9, die aus dem Werkzeugblock 1 herausgeführt ist, bei der Extrusion der Kabelführungsvorrichtung mit alternierendem Drehsinn und/oder mit unterschiedlicher Drehgeschwindigkeit mit Hilfe eines zugeordneten Antriebes 10 angetrieben.

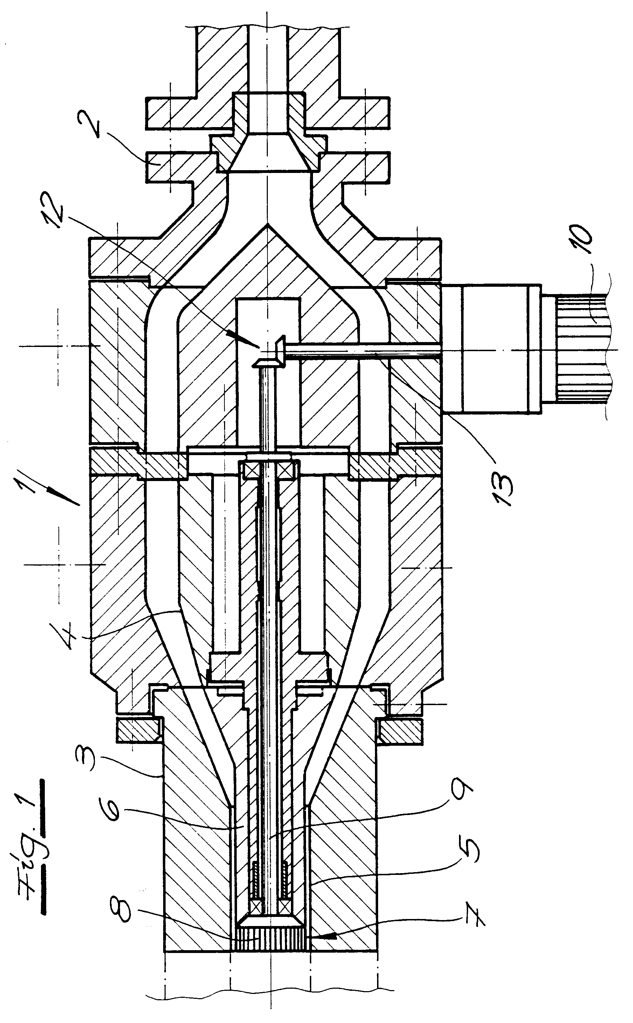

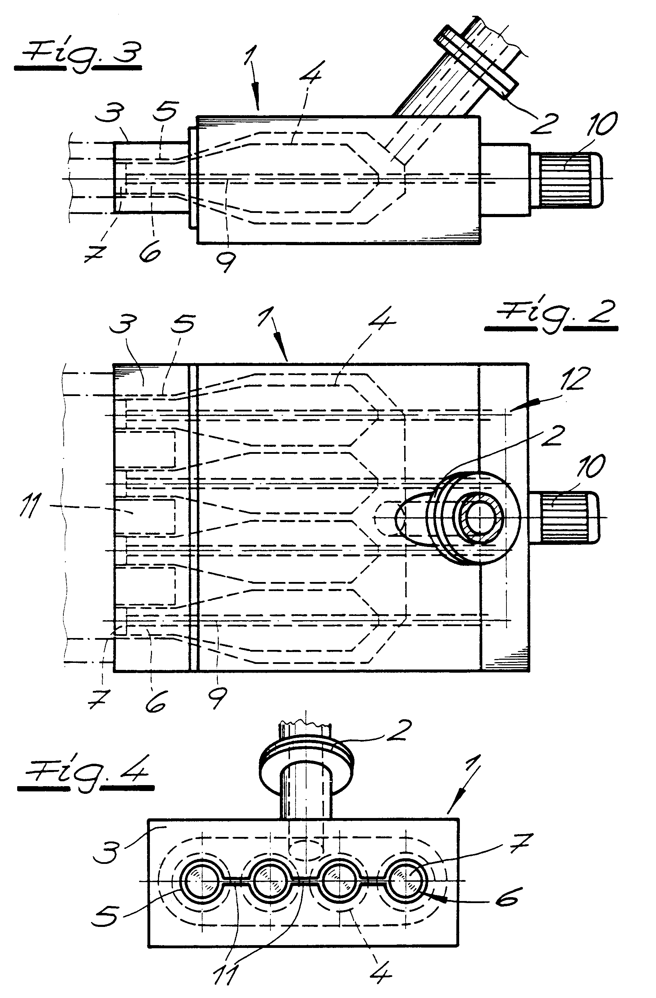

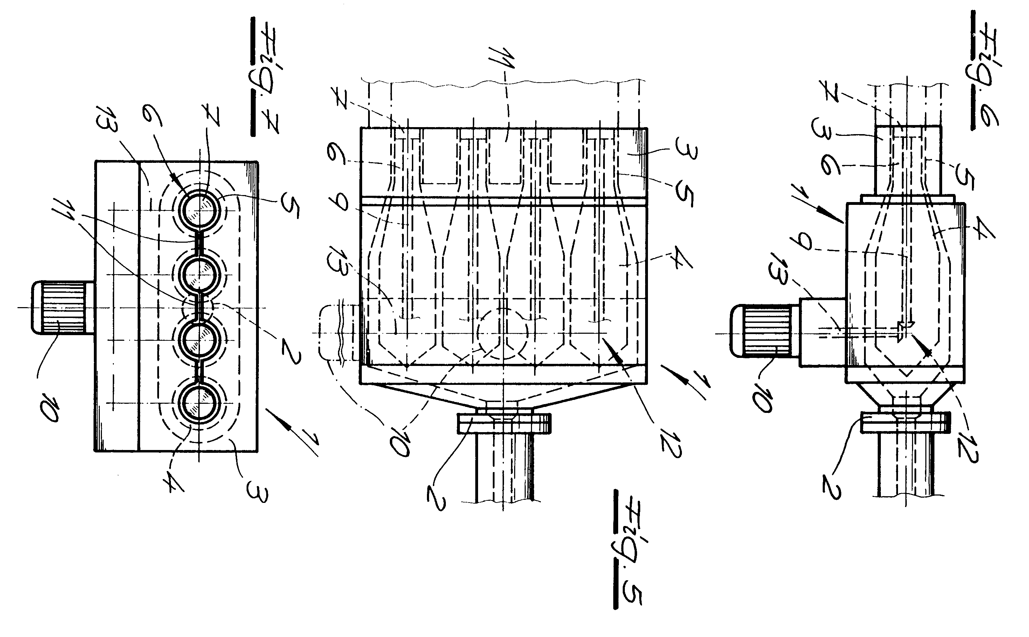

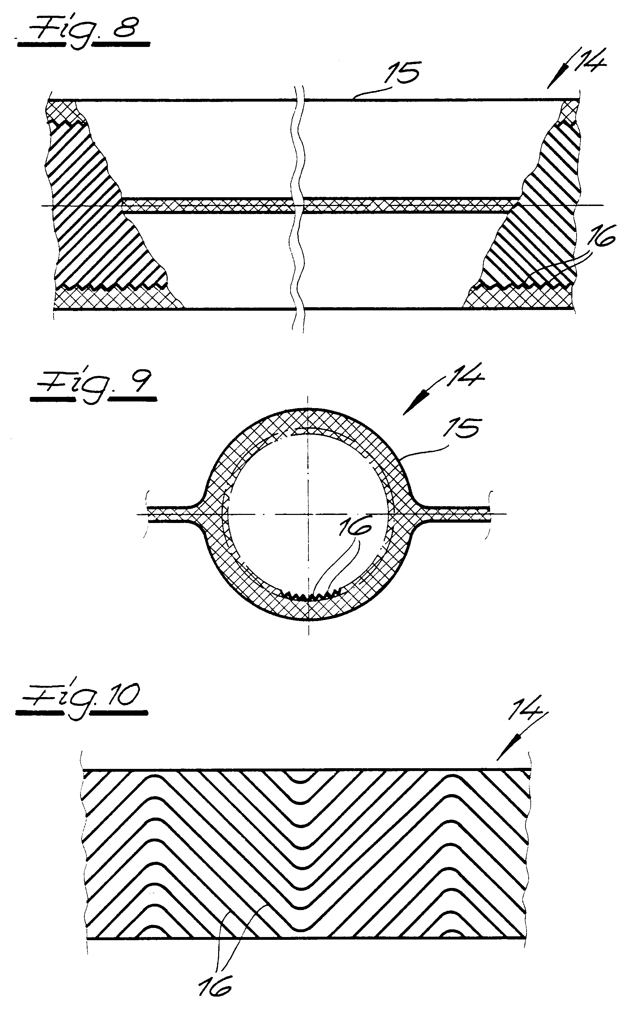

Die Fig. 1 zeigt die Ausführungsform eines erfindungsgemäßen Werkzeugblockes 1 im Längsschnitt. In den Fig. 2 bis 7 erkennt man, daß für die Herstellung der Kabelfuhrungsvorrichtung mit mehreren Kabelführungsrohren, die über Stege verbunden und zu einem Kabelführungsrohrbündel zusammenlegbar sind, mehrere Extrusionskanäle 5 und darin angeordnete Dorne 6 mit Gleitrippenwerkzeug 7 und Gleitrippenwerkzeugwelle 9 vorgesehen sind. Die Extrusionskanäle 5 sind nebeneinander angeordnet. Die Gleitrippenwerkzeugwellen 9 sind unmittelbar oder über zumindest eine Zwischenwelle aus dem Werkzeugblock 1 herausgeführt sowie an einen Antrieb 10 angeschlossen. Die Extrusionskanäle 5 sind über stegbildende Schlitze 11 miteinander verbunden. Die Stege sind Verbindungsstege zwischen den einzelnen Kabelführungsrohren des aus mehreren Kabelführungsrohren bestehenden Aggregates.

Die Fig. 2 bis 4 zeigen die Ausführungsform, bei der der Extruderanschluß 2 an der Oberseite des Werkzeugblockes 1 angeordnet ist und die Gleitrippenwerkzeugwellen 9 an der den Extrusionskanälen 5 gegenüberliegenden Seite aus dem Werkzeugblock 1 herausgeführt sind. Die Fig. 5 bis 7 zeigen die Ausführungsform, bei der der Extruderanschluß 2 an der den Extrusionskanälen 5 gegenüberliegenden Seite an den Werkzeugblock 1 angeschlossen ist und die Gleitrippenwerkzeugwellen 9 über ein Kegelradgetriebe 12 an eine Zwischenwelle 13 angeschlossen sind, die an der Oberseite und/oder Unterseite aus dem Werkzeugblock 1 herausgeführt sind. Außerdem wurde in Fig. 5 angedeutet, daß die Gleitrippenwerkzeugwellen 9 über ein Kegelradgetriebe 12 an eine Zwischenwelle 13 angeschlossen sind, die eine der Anzahl der Gleitrippenwerkzeugwellen 9 entsprechende Anzahl von Kegelrädern trägt und seitlich aus dem Werkzeugblock 1 herausgeführt ist. Die Gleitrippenwerkzeugwellen 9 können über Getriebe an einen einzigen Antriebsmotor angeschlossen sein oder jede einzeln mit einem separaten Antrieb verbunden sein. Der Antrieb ist vorzugsweise zur Erzeugung von wellenförmigen Gleitrippen 10 eingerichtet, wozu insbesondere auf die Fig. 10 verwiesen wird.

In den Fig. 8 bis 10 erkennt man einen Ausschnitt aus einer Kabelführungsvorrichtung 14, wie sie mit den beschriebenen Werkzeugblöcken herstellbar ist. Man erkennt, daß die Innenkontur des Kabelführungsrohres 15 bzw. der Kabelführungsrohre Gleitrippen 16 aufweist, die nicht mit einheitlicher Richtung in Längsrichtung des Kabelführungsrohres 15 verlaufen, sondern vielmehr eine alternierende Richtung aufweisen. Die Gleitrippen 16 könnten auch unterschiedliche Steigung aufweisen.

## Patentansprüche

1. Werkzeugblock (1) für das Strangpressen einer Kabelführungsvorrichtung aus thermoplastischem Kunststoff mit mehreren Kabelführungsrohren (15), die über Stege verbunden und zu einem Kabelführungsrohrbündel zusammenlegbar sind, mit Hilfe eines Extruders, - mit einem mehrteiligen Außenwerkzeug (3) und einem Innenwerkzeug (4), wobei der Werkzeugblock (1) die Außenkontur eines Kabelführungsrohres bestimmende Extrusionskanäle (5) und darin einen die runde Innenkontur des Kabelführungsrohres bestimmenden Dorn (6) aufweist, der über Stege im Außenwerkzeug (3) gehalten ist, **dadurch gekennzeichnet**, daß mehrere über stegbildende Schlitze (11) verbundene Extrusionskanäle (5) und darin angeordnete Dorne (6) mit einem Gleitrippenwerkzeug (7), welches umfangsseitig eine gleitrippenbildende Profilierung (8) aufweist, und mit einer Gleitrippenwerkzeugwelle (9) nebeneinander angeordnet sind, wobei die Gleitrippenwerkzeugwellen (9) unmittelbar oder über zumindest eine Zwischenwelle (13) aus dem Werkzeugblock (1) herausgeführt sowie an einen Antrieb (10) angeschlossen sind, der mit alternierendem Drehsinn arbeitet.

2. Werkzeugblock nach Anspruch 1, dadurch gekennzeichnet, daß der Extruderanschluß (2) an der Oberseite des Werkzeugblockes (1) angeordnet ist und die Gleitrippenwerkzeugwellen (9) an der den Extrusionskanälen (5) gegenüberliegenden Seite aus dem Werkzeugblock (1) herausgeführt sind.

3. Werkzeugblock nach Anspruch 1, dadurch gekennzeichnet, daß der Extruderanschluß (2) an der den Extrusionskanälen (5) gegenüberliegenden Seite an den Werkzeugblock (1) angeschlossen ist und die Gleitrippenwerkzeugwellen (9) über ein Kegelradgetriebe (12) an eine Zwischenwelle (13) angeschlossen sind, die an der Oberseite und/oder an der Unterseite aus dem Werkzeugblock (1) herausgeführt sind.

4. Werkzeugblock nach Anspruch 1, dadurch gekennzeichnet, daß der Extruderanschluß (2) an der den Extrusionskanälen (5) gegenüberliegenden Seite an den Werkzeugblock (1) angeschlossen ist und die Gleitrippenwerkzeugwellen (9) über ein Kegelradgetriebe (12) an eine Zwischenwelle (13) angeschlossen sind, die eine der Anzahl der Gleitrippenwerkzeugwellen (9) entsprechende Anzahl von Kegelrädern trägt und seitlich aus dem Werkzeugblock (1) herausgeführt ist.

5. Werkzeugblock nach einem der Ansprüche 1 bis 4, dadurch gekennzeichnet, daß der Antrieb (10) zur Erzeugung von wellenförmigen Gleitrippen (16) eingerichtet ist.

## Claims

1. A die block (1) for the extrusion, with the aid of an extruder, of a cable routing device made of synthetic thermoplastic material and having a plurality of cable conduits (15), which are joined via webs and which can be folded to form a cable conduit bundle, - with a multi-part outer die (3) and an inner die (4), wherein the die block (1) has the external contour of extrusion channels (5) which determine a cable conduit and has a mandrel (6) in the channels which determines the round internal contour of the cable conduit, which mandrel is held in the outer die (3) via bridges, characterised in that a plurality of extrusion channels (5), which are joined via web-forming slits (11), and mandrels (6) which are disposed in the channels are disposed side by side, with a sliding rib tool (7) which has a profiled pattern (8) on its periphery forming sliding ribs, and with a sliding rib tool spindle (9), wherein the sliding rib tool spindles (9) are led out of the die block (1) directly or via at least one intermediate spindle (13) and are connected to a drive (10) which operates with an alternating direction of rotation.

2. A die block according to claim 1, characterised in that the extruder connection (2) is disposed on the upper face of the die block (1) and the sliding rib tool spindles (9) are led out of the die block (1) on the side opposite the extrusion channels (5).

3. A die block according to claim 1, characterised in that the extruder connection (2) is attached to the die block (1) on the side opposite the extrusion channels (5) and the sliding rib tool spindles (9) are connected via a bevel wheel gear (12) to an intermediate spindle (13), which is led out of the die block (1) on the upper face and/or on the lower face of the latter.

4. A die block according to claim 1, characterised in that the extruder connection (2) is attached to the die block (1) on the side opposite the extrusion channels (5) and the sliding rib tool spindles (9) are connected via a bevel wheel gear (12) to an intermediate spindle (13) which carries a number of bevel wheels corresponding to the number of sliding rib tool spindles (9) and is led out of the die block (1) at the side.

5. A die block according to any one of claims 1 to 4, characterised in that the drive (10) is set for the production of undulating sliding ribs (16).

## Revendications

1. Bloc d'outils (1) pour l'extrusion d'un dispositif formant guide-câble réalisé en matière thermoplastique et comportant plusieurs tubes (15) de guidage de câbles, qui sont réunis par l'intermédiaire de barrettes et peuvent être rassemblés pour former un faisceau de tubes de guidage de câbles, à l'aide d'une extrudeuse, - comportant un outil extérieur (3) formé de plusieurs éléments et un outil intérieur (4), le bloc d'outils (1) possédant des canaux d'extrusion (5) déterminant le contour extérieur d'un tube de guidage de câble, et, dans ces canaux un mandrin (6) déterminant le contour intérieur circulaire du tube de guidage du câble, et qui est retenu par des barrettes dans l'outil extérieur (3), caractérisé en ce que plusieurs canaux d'extrusion (5) reliés par l'intermédiaire de fentes (11) définissant des barrettes, et des broches (6) situées dans ces canaux et comportant un outil à nervures de glissement (7), qui possède sur sa périphérie un profil (8) définissant des nervures de glissement, et un arbre (9) de l'outil à nervures de glissement sont disposés côte-à-côte, les arbres (9) des outils à nervures de glissement ressortissant directement ou au moyen d'au moins un arbre intermédiaire (13) hors du bloc d'outils (1) et étant raccordés à un dispositif d'entraînement (10), qui travaille avec un sens de rotation alternatif.

2. Bloc d'outils selon la revendication 1, caractérisé en ce que le raccord (2) de l'extrudeuse est disposé sur la face supérieure du bloc d'outils (1) et que les arbres (9) des outils à nervures de glissement ressortent hors du bloc d'outils (1), sur le côté situé à l'opposé des canaux d'extrusion (5).

3. Bloc d'outils selon la revendication 1, caractérisé en ce que le raccord (2) de l'extrudeuse est raccordé au bloc d'outils (1) sur le côté situé à l'opposé des canaux d'extrusion (5), et les arbres (9) des outils à nervures de glissement sont raccordés par l'intermédiaire d'une transmission à pignons coniques (12), à des arbres intermédiaires (13), qui ressortent du bloc d'outils (1) sur la face supérieure et/ou sur la face inférieure.

4. Bloc d'outils selon la revendication 1, caractérisé en ce que le raccord (2) de l'extrudeuse est raccordé au bloc d'outils (1), sur le côté situé à l'opposé des canaux d'extrusion (5), et les arbres (9) des outils à nervures de glissement sont raccordés par l'intermédiaire d'une transmission à pignons coniques (12) à un arbre intermédiaire (13), qui porte un nombre de pignons coniques, qui correspond au nombre des arbres (9) des outils à nervures de glissement et ressort latéralement hors du bloc d'outils (1).

5. Bloc d'outils selon l'une des revendications 1 à 4, caractérisé en ce que le dispositif d'entraînement (10) est agencé pour la réalisation de nervures de glissement de forme ondulée (16).
